Europäisches Patentamt

European Patent Office

Office européen des brevets

(11) Veröffentlichungsnummer: **0 064 753**
**A1**

## (12) EUROPÄISCHE PATENTANMELDUNG

(21) Anmeldenummer: **82104016.9**

(22) Anmeldetag: **08.05.82**

(51) Int. Cl.³: **G 01 N 3/24**
**G 01 N 33/24**

(30) Priorität: **12.05.81 CH 3051/81**

(43) Veröffentlichungstag der Anmeldung:
**17.11.82 Patentblatt 82/46**

(84) Benannte Vertragsstaaten:
**AT BE DE FR GB IT LU NL SE**

(71) Anmelder: **GEORG FISCHER AKTIENGESELLSCHAFT**
**Mühlentalstrasse 105**
**CH-8201 Schaffhausen(CH)**

(72) Erfinder:
**Der Erfinder hat auf seine Nennung verzichtet**

(54) Sandprüfgerät.

(57) Zur Messung der Scherverschiebung von Giessereisanden wird ein Prüfrohr (6) mit einem Teil des Probekörpers (3) gegenüber den in einem Prüfring (7) befindlichen anderen Teil des Probekörpers (3) verschoben. Die Verschiebung erfolgt mittels einer gleichmässig, elektromotorisch angetriebenen Spindel (14), wobei die Verschiebekraft mittels einem als Widerlager (5) wirkenden Druckkraftmessgeber (19) gemessen wird. Der Verschiebeweg wird mit einem Wegaufnehmer (21) berührungslos gemessen, wobei Kraft und Weg mittels Digital-Anzeigegeräten (23, 24) angezeigt und mittels eines Kraft-Weg-Schreibers (25) aufgezeichnet werden.

Fig.1

EP 0 064 753 A1

GEORG FISCHER AKTIENGESELLSCHAFT,    8201 Schaffhausen

2240/GAP /   7.5.1981 / Li-bs /

Sandprüfgerät

Die Erfindung betrifft ein Sandprüfgerät wie es im Oberbegriff von Anspruch 1 gekennzeichnet ist.

Ein Sandprüfgerät der hier genannten Art ist bekannt (Scherverschiebungsprüfapparat Typ PSV der Firma Georg Fischer AG,
Prospekt Nr. GM 711-52/1), bei welchem die Verschiebung des
Prüfrohres mittels einer handbetätigten Spindel erfolgt.

Eine mechanische Wegmesseinrichtung ist mit einer analogen
Zeiger-Anzeige versehen, auf welcher der Verschiebeweg ablesbar ist. Das Prüfrohr ist mittels einer Blattfeder verschwenkbar aufgehängt, wodurch einem bestimmten Verschiebeweg eine
bestimmte Verschiebekraft entspricht und diese auf einer
entsprechend geeichten Skala am Wegmessgerät ablesbar ist.
Nachteilig hierbei ist die Ungenauigkeit der Mess- und Anzeigeeinrichtung, die Ungleichmässigkeit des Verschiebens
des Prüfrohres durch die Handverstellung und der grosse Zeitbedarf für die Prüfung und Auswertung einer Sandprobe.

Aufgabe der vorliegenden Erfindung ist die Schaffung eines
eingangs genannten Sandprüfgerätes, mittels welchem eine
genaue Messung und Anzeige des Verschiebeweges und der jeweiligen Verschiebekraft während dem Prüfvorgang möglich ist und eine rasche Auswertung der gemessenen Werte gewährleistet.

Erfindungsgemäss wird dies durch die im kennzeichnenden Teil von Anspruch 1 angegebenen Merkmale gelöst.

Der motorische Antrieb der Verschiebeeinrichtung ermöglicht eine gleichmässige Messung der Probekörper bei automatischem Ablauf der Prüfung.

Die, elektrische Signale erzeugenden Druck- und Wegaufnehmer gewährleisten eine genaue Messung und Anzeige der Werte während der Prüfung.

Die Werte können auch direkt in einen Computer für die Steuerung von Sandmischern eingegeben werden.

Die Aufzeichnung von Druckkraft und Verschiebeweg mittels eines Kraft/Weg-Schreibers ermöglicht eine sofortige Auswertung der Prüfung.

In weiteren abhängigen Ansprüchen sind besonders vorteilhafte Ausgestaltungen der Erfindung gekennzeichnet.

Die Erfindung wird im Folgenden an Hand der Zeichnungen näher erläutert.

Es zeigen:

Fig. 1    eine Ansicht von vorn eines Sandprüfgerätes, und

Fig. 2    ein Blockschaltbild der Mess- und Anzeigeeinrichtung des Sandprüfgerätes.

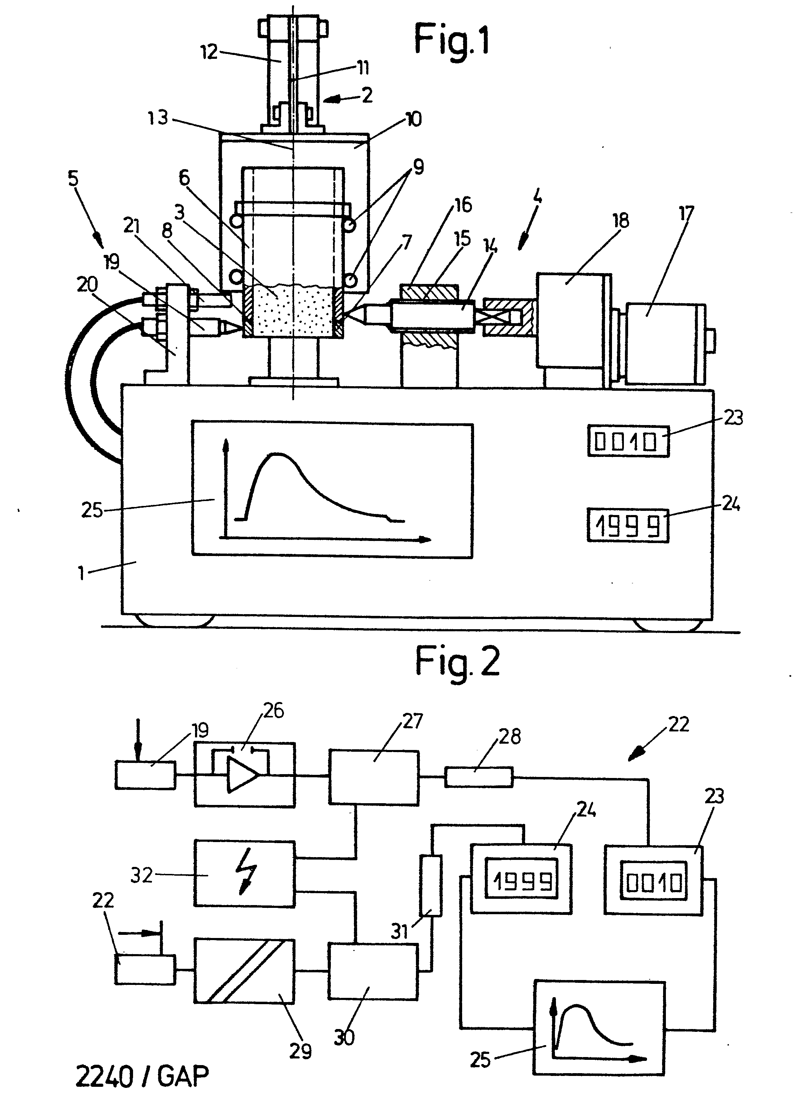

Das in Fig. 1 dargestellte Sandprüfgerät weist ein Gehäuse 1 für die elektrische Steuerung auf, auf welchem eine Halteeinrichtung 2 für einen zu prüfenden Probekörper 3, eine Verschiebeeinrichtung 4 und ein Widerlager 5 angeordnet sind. Der Probekörper 3 befindet sich teilweise in einem Prüfrohr 6 und mit seinem unteren Ende in einem Prüfring 7, wobei Prüfrohr und Prüfring mit schmalen Anlageflächen 8 aneinanderliegen. Das Prüfrohr 6 ist von Stiften 9 gehalten an einem Halteblech 10 leicht auswechselbar angeordnet. Das Halteblech 10 ist mittels einer Blattfeder 11 verschwenkbar an einem Gestell 12 befestigt.

Die Verschiebeeinrichtung 4 weist eine quer zur Prüfrohrachse 13 verschiebbare Spindel 14 auf, welche in einem Mutter-Gewinde 15 eines Lagerbockes 16 gelagert ist und mit ihrem freien Ende am unteren Ende des Prüfrohres 6 angreift. Die Spindel 14 ist mittels eines Elektro-Synchron-Motors 17 mit einem nachgeschalteten Untersetzungsgetriebe 18 antreibbar, wodurch eine pro Zeiteinheit gleichmässige Verschiebung der Spindel 14 und somit auch des Prüfrohres gewährleistet ist.

Das Widerlager 5 weist eine an einem Halteteil 20 angeordnete Druckkraftmesseinrichtung 19 auf, an welcher sich bei Verschiebung des Prüfrohres 6 der Prüfring 7 abstützt. Die Druckkraftmesseinrichtung 19 besteht vorzugsweise aus einem Quarzkristall. An dem Halteteil 20 ist ausserdem eine Wegmesseinrichtung 21 angeordnet, welche vorzugsweise ein berührungsloser, induktiv arbeitender Wegaufnehmer ist.

Der Druckkraftaufnehmer 19 und der Wegaufnehmer 21 sind mit einem Auswertgerät 22 wirkverbunden, welches im Gehäuse 1 angeordnet ist und je ein Digital-Anzeigegerät 23 und 24 für die Druckkraft und den Verschiebeweg sowie einen Kraft-Weg Schreiber 25 aufweist.

Fig. 2 zeigt das Blockschaltbild für das Sandprüfgerät. Der Druckaufnehmer 19 ist über einen Ladungsverstärker 26 mit einem Maximalwertspeicher 27 und dieser über einem Widerstand 28 mit dem Digital-Anzeigegerät 23 wirkverbunden.

Der induktive Wegaufnehmer 21 ist über einen Induktiv-Verstärker 29 mit einem weiteren Maximalwertspeicher 30 und dieser über einen Widerstand 31 mit dem Digital-Anzeigegerät 24 für den Verschiebeweg wirkverbunden. Die beiden Digital-Anzeigegeräte 23 und 24 sind über Leitungen mit dem Kraft-Weg-Schreiber 25 verbunden.

Eine Niederspannungsstromversorgung 32 ist mit den beiden Verstärkern 26, 29 und den Maximalwertspeichern 27, 30 zu deren Stromversorgung verbunden.

Zur Prüfung von Giessereisand, insbesonders von bentonitgebundener Formsande wird in dem Prüfrohr 6 und dem Prüfring 7 durch Verdichten der Probekörper 3 hergestellt, welcher mit dem Prüfrohr zwischen die Stifte 9 des Haltebleches 10 eingehängt wird.

Der Prüfring 7 wird allein durch den verdichteten Probekörper gehalten,wobei er seitlich an dem Druckkraftaufnehmer 19 des Widerlagers 5 anliegt. Durch Einschalten des Elektromotors 17 bewegt sich die Spindel 14 in Richtung des Widerlagers 5, wodurch das Prüfrohr 6 sich gegenüber dem abgestützten Prüfring 7 verschiebt und eine Scherverschiebung zweier Teile des Probekörpers 3 stattfindet.

Die dabei entstehende Verschiebekraft und der Verschiebeweg werden dabei bis zum Abschervorgang laufend gemessen und an den Digital-Anzeigegeräten angezeigt und mittels des Kraft-Weg-Schreibers aufgezeichnet.

0064753

Das aufgezeichnete Kraft-Weg-Diagramm ermöglicht eine sofortige Auswertung des Prüfergebnisses. Die Scherverschiebung kann bei warmen als auch bei grünem Sand gemessen werden, wobei im erstgenannten Fall die Verhältnisse, wie sie unter Einwirkung der Giesshitze auf den Formsand vorliegen, möglichst genau nachgeahmt werden können. Hierbei wird durch Erhitzen am unteren Ende des Prüfkörpers eine Feuchtigkeitskondensationszone aufgebaut und eine Abscherung in dieser Zone durchgeführt.

<u>P a t e n t a n s p r ü c h e</u>

2240/GAP

1. Sandprüfgerät zur Prüfung der Scherverschiebung eines aus Giessereisand, insbesondere aus bentonitgebundenem Formsand, hergestellten Probekörpers, welcher in einem, mit einem Prüfring versehenen, schwenkbar aufgehängten Prüfrohr angeordnet ist, mit einer quer zur Prüfrohrachse am Prüfrohr angreifenden Verschiebeeinrichtung, wodurch eine relative Verschiebung zwischen dem Prüfrohr und dem an einem Widerlager sich abstützenden Prüfring erzeugbar ist, sowie mit einer Druckkraftmess- und einer Wegmesseinrichtung, dadurch gekennzeichnet, dass die Verschiebeeinrichtung (4) eine motorisch antreibbare Spindel (14) aufweist, dass die Druckkraftmesseinrichtung (19) bzw. die Wegmesseinrichtung (21) elektrische Signale erzeugende und am Widerlager (5) angeordnete Druckaufnehmer (19) bzw. Wegaufnehmer (21) sind, welche über Verstärker (26, 29) mit einem Auswertgerät (22) wirkverbunden sind.

2. Sandprüfgerät nach Anspruch 1, dadurch gekennzeichnet, dass das Auswertgerät (22) je ein Digital-Anzeigegerät (23, 24) für die Druckkraft und den Verschiebeweg, sowie einen Kraft/Weg-Schreiber (25) aufweist.

3. Sandprüfgerät nach einem der Ansprüche 1 oder 2, dadurch gekennzeichnet, dass der Druckaufnehmer (19) ein Quarzkristall (19) ist.

- -

4. Sandprüfgerät nach einem der Ansprüche 1 bis 3, dadurch gekennzeichnet, dass der Wegaufnehmer (21) ein berührungsloser induktiv arbeitender Wegaufnehmer ist.

5. Sandprüfgerät nach einem der Ansprüche 1 bis 4, dadurch gekennzeichnet, dass die Spindel (14) mit einem Synchron-Elektromotor (17) und einem nachgeschalteten Getriebe (18) antreibbar ist.

6. Sandprüfgerät nach einem der Ansprüche 1 bis 5, dadurch gekennzeichnet, dass das Auswertgerät (22) mindestens einen Maximalwertspeicher (27, 30) aufweist.

Fig.1

Fig.2

0064753

2240 / GAP

0064753

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| Y | DD - A - 101 760 (S. GROSSMANN et al.) <br> * Anspruch 5; Seite 7, Zeilen 11 bis 19; Seite 7, letzter Absatz bis Seite 8, 2. Absatz; Seite 12, letzter Absatz; Fig. 5, 6 * <br> -- | 1,2 |
| Y | US - A - 3 406 567 (C.W. TERRY) <br> * Anspruch 1; Spalte 2, Zeilen 15 bis 34; Spalte 3, Zeilen 34 bis 52; Fig. 3 * <br> -- | 1 |
| P,Y | EP - A1 - 0 042 598 (G. FISCHER AG.) <br> * Ansprüche 1, 2, 4, 8, 9; Seite 1, Zeilen 4 bis 14; Seite 7, Zeilen 1 bis 7; Fig. 4 * <br> -- | 1-4, 6 |
| Y | DD - A - 91 733 (R. KEGEL) <br> * Ansprüche 1 bis 3; Spalte 1, Zeilen 8 bis 11; Spalte 4, Zeilen 13 bis 31; Fig. 4, 5 * <br> -- | 1,4 |
| Y | GB - A - 1 310 530 (W.D. CRAIG) <br> * Seite 1, Zeilen 57 bis 61 * <br> -- | 3 |
| Y | DE - A - 2 932 288 (CHINOIN GYOGYSZER ES VEGYESZETI TERMEKEK GYARA RT) <br> * Seite 7, letzter Absatz bis Seite 8, erster Absatz * <br> ./.. -- | 6 |

**KLASSIFIKATION DER ANMELDUNG (Int Cl )**

G 01 N   3/24

G 01 N 33/24

**RECHERCHIERTE SACHGEBIETE (Int Cl )**

G 01 N   3/00

G 01 N 33/00

**KATEGORIE DER GENANNTEN DOKUMENTE**

X: von besonderer Bedeutung allein betrachtet
Y: von besonderer Bedeutung in Verbindung mit einer anderen Veroffentlichung derselben Kategorie
A: technologischer Hintergrund
O: nichtschriftliche Offenbarung
P: Zwischenliteratur
T: der Erfindung zugrunde liegende Theorien oder Grundsatze
E: alteres Patentdokument, das jedoch erst am oder nach dem Anmeldedatum veroffentlicht worden ist
D: in der Anmeldung angefuhrtes Dokument
L: aus andern Grunden angefuhrtes Dokument

&. Mitglied der gleichen Patentfamilie, ubereinstimmendes Dokument

X   Der vorliegende Recherchenbericht wurde fur alle Patentansprüche erstellt

| Recherchenort | Abschlußdatum der Recherche | Pruter |
|---|---|---|
| Berlin | 22-07-1982 | HOFMANN |

# 0064753

Europäisches
Patentamt

**EUROPÄISCHER RECHERCHENBERICHT**

| | EINSCHLÄGIGE DOKUMENTE | | | KLASSIFIKATION DER ANMELDUNG (Int. Cl.³) · |
|---|---|---|---|---|
| Kategorie | Kennzeichnung des Dokuments mit Angabe, soweit erforderlich, der maßgeblichen Teile | | betrifft Anspruch | |
| Y | DE - A1 - 2 948 948 (K.K. HOSOKAWA FUNTAI KOGAKU KENKYUSHO) <br> * Anspruch 1; Seite 12, dritter Absatz; Fig. 1, 2, 3 * <br> ---- | | 1-4 | |
| | | | | **RECHERCHIERTE SACHGEBIETE (Int. Cl.³)** |

EPA Form 1503.2  06.78